# EUROPÄISCHE PATENTSCHRIFT

(11) **EP 3 418 699 B1**
(45) Veröffentlichungstag und Bekanntmachung des Hinweises auf die Patenterteilung: **24.08.2022**
(21) Anmeldenummer: 17177147.0
(22) Anmeldetag: 21.06.2017
(51) Int. Cl.: G01S 13/34, G01S 13/88, G01F 23/284

(54) **FÜLLSTANDRADARGERÄT MIT GESTEUERTER SENDELEISTUNG**
FILL LEVEL RADAR DEVICE WITH CONTROLLED TRANSMISSION POWER
JAUGE RADAR À PUISSANCE D'ÉMISSION COMMANDÉE

(43) Veröffentlichungstag der Anmeldung: 26.12.2018
(73) Patentinhaber: VEGA Grieshaber KG, 77709 Wolfach (DE)
(72) Erfinder: WELLE, Roland, 77756 Hausach (DE); GRIESSBAUM, Karl, 77796 Mühlenbach (DE)
(74) Vertreter: Maiwald Patent- und Rechtsanwaltsgesellschaft mbH

(56) Entgegenhaltungen:
- EP-A2- 0 928 974
- EP-A2- 1 992 923
- EP-A2- 2 166 671
- US-A- 4 503 433

## Beschreibung

### Gebiet der Erfindung

Die Erfindung betrifft die Füllstandmesstechnik. Insbesondere betrifft die Erfindung ein Füllstandradargerät mit einer Sendeleistungseinstellvorrichtung, ein Verfahren zur Füllstandbestimmung, ein Programmelement und ein computerlesbares Medium.

### Hintergrund

Füllstandradargeräte bestimmen den Füllstand aus der Laufzeit elektromagnetischer Wellen, die vom Messgerät als Sendesignal ausgesendet und nach Reflexion am Füllgut wieder empfangen werden. Aus der Laufzeit der elektromagnetischen Wellen lässt sich ein Abstand zwischen dem Messgerät und dem Füllgut, und aus diesem wiederum ein Befüllungsgrad eines mit dem Messgerät ausgestatteten Behälters ermitteln. Bei den elektromagnetischen Wellen kann es sich um Hochfrequenzwellen oder Mikrowellen handeln. Sie können vom Messgerät in Richtung Füllgut frei abgestrahlt werden oder alternativ von einem Wellenleiter hin- und zurückgeleitet werden.

Zur Messung der Laufzeit elektromagnetischer Wellen zwischen deren Aussendung und Empfang sind verschiedene Messverfahren bekannt. Grundsätzlich lassen sie sich unterscheiden in Verfahren, welche die Laufzeit sehr kurze Sendepulse messen, meist als Puls-Radar bezeichnet, und Messprinzipien, welche auf der Modulation von kontinuierlich gesendeten Signalen beruhen. Diese als CW (Continuous Wave)-Radar bekannten Verfahren senden während der Dauer eines Messvorgangs ständig, womit die Sendedauer im Gegensatz zum Puls-Verfahren innerhalb eines Messzyklus typischerweise um Größenordnungen länger als die Laufzeit der Signale ist.

Durch die Modulation der Sende- und Empfangswellen lässt sich dabei die Laufzeit indirekt bestimmen. Beim FMCW-Verfahren (FMCW: Frequency Modulated Continuous Wave) wird hierzu eine lineare Frequenzmodulation verwendet.

EP 1 992 923 A2 beschreibt ein Füllstandradargerät, bei dem die durchschnittliche Leistung des Empfangssignals unter einem Schwellwert gehalten wird.

EP 2 166 671 A2 beschreibt ein Füllstandmessgerät mit einem steuerbaren Dämpfungselement, um die Signalerzeugung zu verbessern.

### Zusammenfassung der Erfindung

Es ist eine Aufgabe der Erfindung, die Messgenauigkeit von Füllstandradargeräten zu erhöhen.

Diese Aufgabe wird durch die Merkmale der unabhängigen Patentansprüche gelöst. Weiterbildungen der Erfindung ergeben sich aus den abhängigen Ansprüchen und der folgenden Beschreibung von Ausführungsformen.

Ein erster Aspekt der Erfindung betrifft ein Füllstandradargerät mit einer Signalquellenanordnung, die eingerichtet ist, ein elektromagnetisches Sendesignal zu erzeugen, dessen Dauer größer ist als die Zeit, die das Sendesignal benötigt, von der Signalquellenanordnung zum Füllgut zu laufen, dort reflektiert zu werden, und dann wieder zurück zum Füllstandradargerät und dessen Auswerteschaltung zu laufen.

Das Füllstandradargerät weist darüber hinaus eine Sendeleistungseinstellvorrichtung oder -schaltung auf, die eingerichtet ist, die Leistung des Sendesignals in Abhängigkeit von der Frequenz des Sendesignals einzustellen. Diese Abhängigkeit entspricht einem vorgebbaren Zusammenhang und dieser Zusammenhang kann so gewählt sein, dass sich die Leistung des Sendesignals bei Durchfahren des verwendeten Frequenzbandes (Sweep) ändert.

Gemäß einer Ausführungsform der Erfindung ist das Füllstandradargerät als CW-Füllstandradargerät ausgeführt. Die Frequenz des Sendesignals kann hierbei moduliert sein und beispielsweise während eines Messzyklus eine lineare oder gestufte Rampe durchfahren. In diesem Zusammenhang spricht man vom FMCW-Verfahren oder einem gestuften CW-Verfahren. Handelt es sich bei dem Sendesignal um ein stufenförmiges Sendesignal mit abschnittsweise konstanter Frequenz, so liegen die einzelnen Frequenzen des Sendesignals innerhalb eines definierten Frequenzbandes, beispielsweise in konstantem Abstand zueinander.

Gemäß einer Ausführungsform der Erfindung ist das Füllstandradargerät zum Anschluss an eine 4 bis 20 mA Zweileiterschleife ausgeführt, über welche das Füllstandradargerät mit der für die Messung erforderlichen Energie versorgt wird und über welche das Gerät Messdaten versendet und von einer externen Stelle Parametrierungsdaten empfangen kann.

Gemäß einer Ausführungsform der Erfindung ist der vorgebbare Zusammenhang von der Temperatur des Füllguts, der Temperatur im Behälter, dem Druck im Behälter, der Zusammensetzung des Füllguts, der Zusammensetzung der Behälteratmosphäre und/oder den Strahlungsdämpfungseigenschaften oder Absorptionseigenschaften der Behälteratmosphäre abhängig. So kann der vorgebbare Zusammenhang beispielsweise berücksichtigen, dass bei gegebenen Randbedingungen (Druck im Behälter, Zusammensetzung des Füllguts, Temperatur im Behälter) die Behälteratmosphäre das Sendesignal in Abhängigkeit von der Frequenz stärker oder schwächer dämpft. Dieser Effekt kann korrigiert oder zumindest teilweise ausgeglichen werden, indem bei stärkerer Dämpfung mit höherer Leistung gesendet wird.

Gemäß einer weiteren Ausführungsform der Erfindung ist der vorgebbare Zusammenhang vom Montageort des Füllstandmessgeräts abhängig, insbesondere können hier Ländergrenzen eine Rolle spielen. So kann beispielsweise vorgesehen sein, dass in einem bestimmten Land das Füllstandradargerät bei bestimmten Frequenzen mit einer anderen Leistung sendet als in einem anderen Land. Auch kann vorgesehen sein, dass das Füllstandradargerät an einem ganz konkreten Ort (beispielsweise, weil dort viele andere Messgeräte in direkter Nachbarschaft angeordnet sind) bei bestimmten Frequenzen mit geringerer Leistung sendet als an anderen Orten. Insbesondere kann vorgesehen sein, dass das Füllstandradargerät den Montageort selber bestimmt. Hierfür ist ein Positionssensor im Messgerät vorgesehen, beispielsweise ein GPS-Modul. Das Messgerät kann sich gemäß einer Ausführungsform, wenn es seinen Montageort kennt, selbstständig den vorgebbaren Zusammenhang von externer Stelle beschaffen. Alternativ ist vorgesehen, dass der vorgebbare Zusammenhang bereits in einer Datenbank des Messgeräts abgelegt ist oder vom Messgerät selbstständig berechnet wird.

Selbstverständlich kann der vorgebbare Zusammenhang von einer Vielzahl an Randbedingungen abhängen, nicht nur vom Montageort, sondern vielmehr auch von den Verhältnissen im Behälter (Druck, Temperatur, etc.).

Im Übrigen kann der vorgebbare Zusammenhang auch von der für die Messung verfügbaren Energie und/oder der erforderlichen Messgenauigkeit abhängen. Verknappt sich diese Energie, kann die Sendeleistung, zumindest in bestimmten Frequenzbereichen, herabgeregelt werden.

Gemäß einer weiteren Ausführungsform der Erfindung weist das Füllstandradargerät eine Auswerteschaltung zum Bestimmen des Füllstands unter Verwendung des vorgebbaren Zusammenhangs auf.

Gemäß einer weiteren Ausführungsform der Erfindung weist das Füllstandradargerät eine Steuerschaltung zum Ändern des vorgebbaren Zusammenhangs während einer Betriebsphase des Füllstandmessgeräts auf. So kann beispielsweise eine Änderung des vorgebbaren Zusammenhangs erfolgen, wenn sich die Verhältnisse innerhalb des Behälters ändern, beispielsweise, weil sich die Absorptionseigenschaften bzw. die Strahlungsdämpfungseigenschaften der Behälteratmosphäre ändern.

Gemäß einer weiteren Ausführungsform der Erfindung ist die Steuerschaltung zum Bestimmen des vorgebbaren Zusammenhangs unter Verwendung von benutzerseitig eingegebenen oder vom Füllstandmessgerät erfassten Kenngrößen eingerichtet. Bei diesen Kenngrößen kann es sich beispielsweise um die weiter oben beschriebenen Verhältnisse im Behälter handeln, beispielsweise aber auch um den Montageort des Füllstandmessgeräts. Insbesondere kann das Füllstandmessgerät eine Sensoranordnung aufweisen, welche zumindest einige der oben genannten Kenngrößen selbstständig bestimmen kann, beispielsweise einen Druckmesser oder einen Temperatursensor sowie, wie bereits oben geschildert, einen Positionssensor.

Gemäß einer weiteren Ausführungsform der Erfindung weist das Füllstandradargerät eine Sende- und Empfangsschaltung auf, welche eingerichtet ist zum Aussenden des Sendesignals in Richtung einer Füllgutoberfläche und zum Empfangen des an der Füllgutoberfläche reflektierten Sendesignals und Mischen des empfangenen reflektierten Sendesignals mit einem weiteren Signal zur Bildung eines reflexionsabhängigen Empfangssignals, aus welchem sich der Füllstand bestimmen lässt. Die Mischung kann, je nach Ausführungsform, heterodyn oder homodyn erfolgen.

Ein weiterer Aspekt der Erfindung betrifft ein Verfahren zur Füllstandbestimmung, bei dem ein elektromagnetisches Sendesignal erzeugt wird, dessen Dauer größer ist als die doppelte Laufzeit des Sendesignals von der Signalquelle zum Füllgut. Die Leistung des Sendesignals wird in Abhängigkeit von der Frequenz des Sendesignals entsprechend eines vorgegebenen Zusammenhangs eingestellt, wie bereits weiter oben beschrieben.

An dieser Stelle sei darauf hingewiesen, dass die oben und im Folgenden beschriebenen Merkmale des Füllstandradargeräts auch als Verfahrensschritte implementiert sein können und die im Rahmen der Erfindung beschriebenen verfahrensmäßigen Merkmale können vom Füllstandradargerät durchgeführt werden. Ein weiterer Aspekt der Erfindung betrifft ein Programmelement, das, wenn es auf einem Prozessor eines Füllstandradargeräts ausgeführt wird, das Füllstandradargerät veranlasst, die oben und im Folgenden beschriebenen Verfahrensschritte durchzuführen.

Ein weiterer Aspekt der Erfindung betrifft ein computerlesbares Medium, auf dem ein oben beschriebenes Programmelement gespeichert ist.

Ein Grundgedanke der Erfindung kann darin gesehen werden, dass die abgestrahlte Leistung des Sendesignals während eines Messzyklus des Füllstandradarmessgeräts gezielt gesteuert und verändert wird, um dessen Betriebsverhalten zu optimieren. Im Folgenden werden mit Verweis auf die Figuren Ausführungsformen der Erfindung beschrieben. Werden in den Figuren die gleichen Bezugszeichen verwendet, so bezeichnen diese gleiche oder ähnliche Elemente. Die Darstellungen in den Figuren sind schematisch und nicht maßstäblich.

### Kurze Beschreibung der Figuren

- Fig. 1: zeigt ein Schaltbild eines Füllstandradargeräts.
- Fig. 2: zeigt Beispiele für Sendesignale und die entsprechenden reflexionsabhängigen Empfangssignale.
- Fig. 3: zeigt ein Schaltbild eines weiteren Füllstandradargeräts.
- Fig. 4: zeigt die Leistung eines Sendesignals in Abhängigkeit von dessen Frequenz.
- Fig. 5: zeigt Schritte zur Weiterverarbeitung von digitalisierten Abtastwerten.
- Fig. 6: zeigt die Dämpfung elektromagnetischer Wellen in einer Wasserdampfatmosphäre als Funktion der Frequenz.
- Fig. 7: zeigt zwei Beispiele für maximal erlaubte Sendepegel.
- Fig. 8: zeigt den Verlauf der Sendeleistung gemäß einer ersten Kompensation.
- Fig. 9a, 9b: zeigen Beispiele für eine adaptive Anpassung der Sendeleistung des Füllstandmessgeräts.
- Fig. 10: zeigt einen weiteren Ansatz zur Verbesserung des Betriebsverhaltens des Füllstandmessgeräts.
- Fig. 11: zeigt ein Füllstandradargerät gemäß einer Ausführungsform der Erfindung.
- Fig. 12: zeigt ein weiteres Füllstandradargerät gemäß einer Ausführungsform der Erfindung.
- Fig. 13: zeigt ein Beispiel für eine modifizierte digitale Signalverarbeitung.
- Fig. 14: zeigt ein Füllstandmessgerät auf einem Behälter gemäß einer Ausführungsform der Erfindung.
- Fig. 15: zeigt ein Flussdiagramm eines Verfahrens gemäß einer Ausführungsform der Erfindung.

### Detaillierte Beschreibung von Ausführungsformen

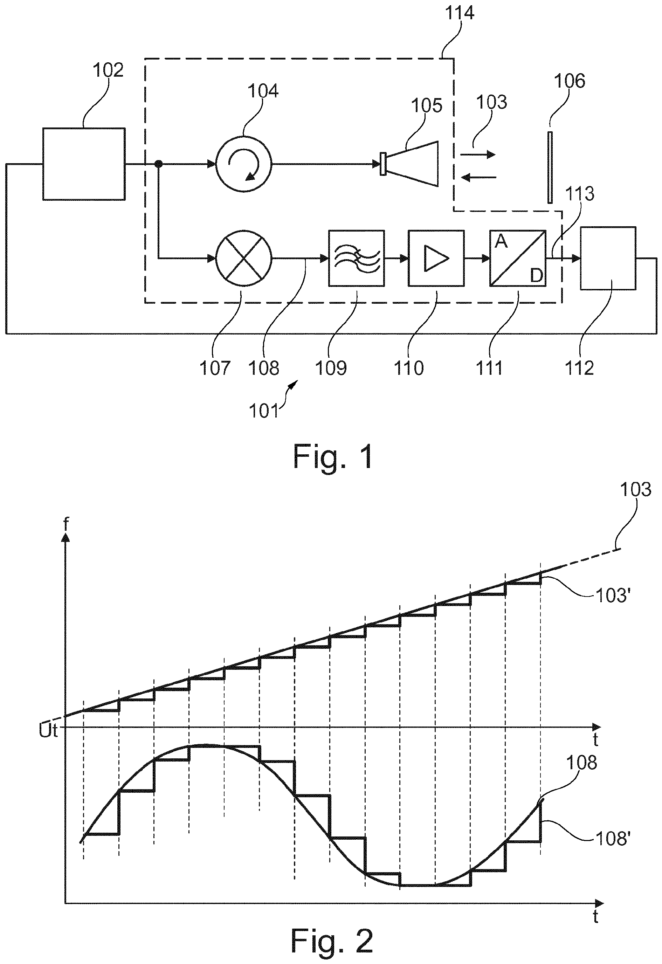

Fig. 1 zeigt in Form eines stark vereinfachten Blockschaltbilds den grundsätzlichen Aufbau einer Sende-Empfangsschaltung 101 eines FMCW-Füllstandradargeräts. Der Synthesizer 102 dient zur Erzeugung des Sendesignals 103 und enthält hierzu beispielsweise einen VCO (voltage controlled oscillator). Über eine im Synthesizer 102 enthaltene Schaltung zur Kontrolle der Sendefrequenz, beispielsweise eine PLL-Schaltung (phase locked loop), wird das Sendesignal linear frequenzmoduliert.

Dieses Sendesignal 103 gelangt über den Zirkulator 104 zur Antenne 105 und wird von dieser in Richtung Reflektor 106 gesendet. Das nach der Reflexion zur Antenne 105 zurückkehrende Empfangssignal gelangt über den Zirkulator 104 zum Mischer 107. Dieser mischt das Empfangssignal mit einem Teil des Sendesignals, wodurch ein sogenanntes Beatsignal 108 entsteht. Dieses wird nach Tiefpassfilterung im Filter 109 und entsprechender Verstärkung im Verstärker 110 von einem Analog-DigitalWandler 111 digitalisiert und danach digital weiterverarbeitet. Durch die Mischung von Sende- und Empfangssignal handelt es sich hier um ein sogenanntes homodynes Empfängerprinzip. Die Entfernung des Reflektors 106 vom Messgerät wirkt sich direkt auf die Frequenz des Beatsignals 108 aus, weshalb umgekehrt aus der gemessenen Beatfrequenz direkt auf die Messentfernung geschlossen werden kann.

Bei mehreren Reflektoren entsteht ein Beatsignal 108 mit einem Frequenzgemisch aus den den verschiedenen Messentfernungen zugehörigen Einzelfrequenzen. Es ist daher üblich, das digitalisierte Beatsignal innerhalb einer Controllerschaltung 112 einer Spektralanalyse zu unterziehen, beispielsweise mit Hilfe einer Fouriertransformation oder einer schnellen Fouriertransformation FFT (fast fourier transformation), um die einzelnen Frequenzanteile bzw. Reflexionsanteile zu separieren und gegebenenfalls hinsichtlich ihrer Frequenz und damit der zugrundeliegenden Messentfernung genau zu bestimmen. Fig. 2 zeigt einen Ausschnitt des Sendesignals 103 mit der linearen Frequenzmodulation in einem Zeit-Frequenz-Diagramm und direkt darunter in einem Zeit-Spannungs-Diagramm beispielhaft ein zugehöriges analoges Beatsignal 108, welches bei einer definierten Reflektorentfernung entsteht.

Eine Variante des FMCW-Verfahrens ist die Abwandlung der linearen Frequenzmodulation des Sendesignals in eine gestuft lineare Frequenzmodulation, wie sie in Fig. 2 als Alternative 103' dargestellt ist. Dabei verharrt das Sendesignal 103' für eine gewisse Zeitdauer auf einer bestimmten Frequenz und springt danach in gleichmäßigen Schritten weiter auf die nächsten Frequenzen. Durch die homodyne Mischung entsprechend dem auch hier gültigen Blockschaltbild aus Fig. 1 entsteht am Mischerausgang eine aus der gegenseitigen Phasenverschiebung von Sende- und Empfangssignal resultierende Gleichspannung für jede Frequenzstufe. Die aus jeder Stufe resultierenden Gleichspannungen ergeben hintereinander gesetzt einen der Beatfrequenz 108 des vorher beschriebenen FMCW-Verfahrens gemäßen Signalverlauf 108'. Dies ist in Fig. 2 ebenfalls ausschnittsweise skizziert.

Wie aus der Abbildung deutlich wird wandelt sich das zuvor kontinuierliche Beatsignal 108 in ein gestuftes Analogsignal 108'. Bei einer anschließenden Analog-Digital-Wandlung dieses gestuften Signals 108' bietet sich natürlich an, pro Stufe genau einen Abtastwert zu wandeln, womit das digitalisierte Beatsignal der gestuften linearen Frequenzmodulation sich nicht wesentlich vom digitalisierten Beatsignal eines Standard-FMCW-Verfahrens unterscheidet. Deshalb ist die weitere digitale Signalverarbeitung, beginnend mit der Spektralanalyse, bei beiden Verfahren identisch.

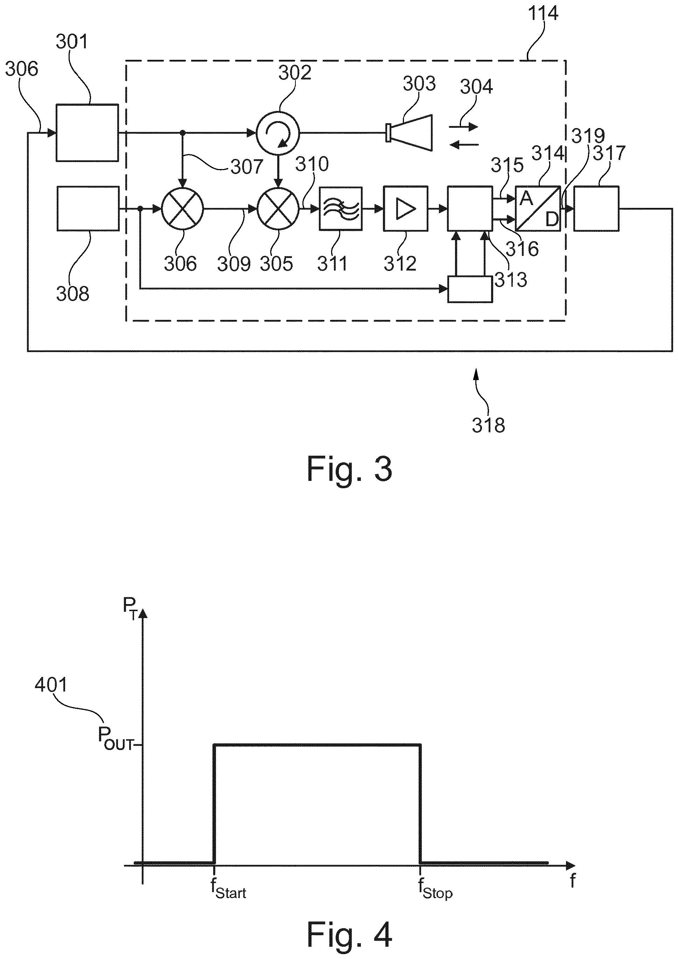

Fig. 3 zeigt ein Blockschaltbild eines zu oben beschrieben FMCW-Verfahren alternativen Messverfahrens. Es unterscheidet sich zu der in Fig. 1 dargestellten Sende-Empfangsschaltung 101 unter anderem durch eine heterodyne Schaltungsausführung, die eine Empfangsmischung des empfangenen Signals mit einem Lokaloszillatorsignal unterschiedlicher Frequenz vorsieht, so dass am Mischerausgang eine Zwischenfrequenz entsteht.

Ebenso wie in Fig. 1 wird vom Synthesizer 301 ein Sendesignal erzeugt, welches über den Zirkulator 302 oder Richtkoppler 302 zur Antenne 303 geleitet und von dieser abgestrahlt wird. Die Antenne 303 wandelt dabei ein über eine Leitung zugeführtes Hochfrequenzsignal in eine elektromagnetische Welle 304, welche entweder frei abgestrahlt oder alternativ über einen Wellenleiter, beispielsweise einen Hohlleiter oder einen Eindraht- oder Mehrdrahtleiter, in Richtung Reflektor geführt wird. Die am Reflektor reflektierte Welle gelangt wenigstens teilweise wieder zurück zur Antenne 303 und wird zurück in ein leitungsgeführtes Empfangssignal gewandelt. Dieses gelangt über den Zirkulator 302 oder Richtkoppler 302 nun zum Empfangsmischer 305.

Der Zirkulator oder Richtkoppler 302 ist ein im Bereich der Radar-Füllstandmessung bekanntes Bauteil, welches bei monostatischem Betrieb, also bei Verwendung der gleichen Antenne zum Senden und Empfangen, vorteilhaft einsetzbar ist. Er besitzt mindestens drei Ports und leitet richtungsselektiv Signale von einem Port vorwiegend zu einem zweiten Port, während der dritte Port hierbei entkoppelt ist. Bei einem ebenfalls möglichen, hier nicht näher gezeigten bistatischen Betrieb werden zum Senden und Empfangen zwei separate Antennen verwendet. Dabei entfällt der Zirkulator oder Richtkoppler 302 und das Signal gelangt einerseits vom Synthesizer 301 zur Sendeantenne und andererseits von der Empfangsantenne zum Empfangsmischer 305.

Der Synthesizer 301 dient zur Erzeugung von verschiedenen Sinusschwingungen verschiedener Frequenz in einem zuvor festgelegten Frequenzband, wobei die Frequenz für eine gewisse Zeitdauer auf einem festen Wert verharrt und danach auf einen neuen festen Frequenzwert springt. Dies kann beispielsweise in Form einer gestuft linearen Frequenzmodulation stattfinden. Dazu enthält er einen abstimmbaren Oszillator, beispielsweise einen VCO (voltage controlled oscillator). Außerdem enthält er in vorteilhafter Weise eine Regelschleife und einen Referenzoszillator. Die Regelschleife, beispielsweise eine Phasenregelschleife PLL (phase- locked loop), regelt die Frequenz des abstimmbaren Oszillators so, dass sie in einem bestimmten, einstellbaren Verhältnis zur Frequenz des Referenzoszillators steht. Die Einstellung des Frequenzverhältnisses geschieht vorteilhaft digital, beispielsweise gesteuert durch eine Controllerschaltung 317 über das Signal 306, und bedeutet meist die Umschaltung eines oder mehrerer Teilerbausteine, welche die Frequenz von Referenzoszillator und / oder des abstimmbaren Oszillators herunterteilen. Dabei sind neben einfachen ganzzahligen Teilern auch nicht ganzzahlige Teiler, sogenannte fractional N-Teiler, möglich. Durch die Verwendung solcher Teiler ist es möglich, die Ausgangsfrequenz des Synthesizers 301 in sehr feinen Schritten über einen relativ großen Frequenzbereich zu verstellen.

Ein Teil des Ausgangssignals des Synthesizers 301 wird abgezweigt, beispielsweise über einen nicht näher gezeigten Power-Splitter oder einen Koppler, um das Lokaloszillatorsignal für den Empfangsmischer 305 zu bilden. Dazu wird über den Mischer 306 das abgezweigte Synthesizersignal 307 mit einem Ausgangssignal eines zweiten Synthesizers 308 gemischt, wodurch verschiedene neue Frequenzanteile wie die Summenfrequenz und die Differenzfrequenz aus den beiden Eingangsfrequenzen entstehen.

Dieser zweite Synthesizer 308 ist grundsätzlich aus gleichen Funktionseinheiten aufgebaut wie der bereits beschriebene Synthesizer 306. Als Regelgröße der (Phasen-)Regelschleife dient jedoch nicht die Ausgangsfrequenz des Synthesizers 306, sondern das Mischer-Ausgangssignal 309 des Mischers 306, welcher die Differenzfrequenz zwischen den beiden Synthesizersignalen bildet. Diese Differenzfrequenz wird somit durch die Regelschleife des Synthesizers 308 auf einen vorher festgelegten Wert, der entweder fest in der PLL-Regelschleife des Synthesizers 308 hinterlegt ist oder in diese durch die Controllerschaltung 317 programmiert wird, ausgeregelt.

Das Ausgangssignal des Synthesizers dient als Lokaloszillatorsignal zur heterodynen Empfangsmischung im Empfangsmischer 305. Im Empfangsmischer 305 entsteht aus Lokaloszillatorsignal und Empfangssignal unter anderem die Differenzfrequenz der beiden Signale. Dieses als Zwischenfrequenzsignal 310 bezeichnete Ausgangssignal des Empfangsmischers 305 besitzt neben der eben erwähnten festen Frequenz eine Phasenlage, die zusammen mit der Amplitude des Zwischenfrequenzsignals eine komplexe Kenngröße des Reflexionskoeffizienten aller an der Reflexion der Welle beteiligter Reflektoren definiert. Oder mit anderen Worten ausgedrückt ist die Phasenlage des Zwischenfrequenzsignals von der gegenseitigen Phasenlage von Lokaloszillatorsignal und Empfangssignal abhängig. Die Phasenlage des Empfangssignals seinerseits hängt ab von der zurückgelegten Strecke der gesendeten bzw. empfangenen Welle und damit von der Reflektorentfernung, während die Phasenlage des Lokaloszillatorsignals vom Synthesizer-Ausgangssignal und damit dem gesendeten Signal abhängt. Somit ist die Phasenlage des Zwischenfrequenzsignals letztlich nur abhängig von der Phasenverschiebung zwischen Sendesignal und Empfangssignal und damit von der Reflektorentfernung.

Im Bandfilter 311 wird dieses Zwischenfrequenzsignal bandgefiltert und im Zwischenfrequenzverstärker 312 verstärkt, um den Signal-Rausch-Abstand zu erhöhen. Um den komplexen Reflexionskoeffizienten aus dem analog vorliegenden Zwischenfrequenzsignal zu bestimmen, kann durch Verwendung eines Quadraturdemodulators 313 das Zwischenfrequenzsignal in seine komplexen Bestandteile, also den Real- und den Imaginärteil, zerlegt und danach beide Anteile getrennt analog-digital gewandelt werden. Vorteilhaft an der Verwendung des Quadraturdemodulators ist, dass Real- und Imaginärteil des Zwischenfrequenzsignals als Basisbandsignale 315, 316 vorliegen, d.h. keine hohen Frequenzanteile mehr enthalten und damit sehr einfach zu digitalisieren sind.

Wie bereits beschrieben erfolgt nach der Analog-Digitalwandlung durch den Analog-Digital-Wandler 314 die Weiterverarbeitung der Messwerte innerhalb der Controllerschaltung 317. Der Schaltungsteil 317 enthält neben Programmcode zur Auswertung der digitalisierten Messsignale insbesondere auch Programmcode zur Ablaufsteuerung eines Messzyklus, d.h. zur Initiierung der Aussendung der Wellen und der Steuerung der Frequenzen sowie der allgemeinen Steuerung der Sende-Empfangsschaltung 318.

Die in Fig. 3 gezeigte Schaltungsanordnung erlaubt wie beschrieben die Bestimmung eines komplexen Reflexionskoeffizienten. Dieser komplexe Reflexionskoeffizient setzt sich zusammen aus allen Reflexionsanteilen, die im empfangenen Signal enthalten sind. Sind mehrere Reflektoren daran beteiligt, so sind die einzelnen Signalanteile nicht mehr separierbar und eine Bestimmung der Distanz der einzelnen Reflektoren ist nicht möglich. Wiederholt man diese Messung auf weiteren eingestellten Ausgangsfrequenzen innerhalb eines bestimmten Frequenzbandes, lässt sich aber eine digitale Wertetabelle bestehend aus den eingestellten Frequenzwerten und den zugehörigen komplexen Reflexionskoeffizienten erstellen. In vorteilhafter Weise werden dabei die Frequenzabstände aller Frequenzwerte gleich gewählt, so dass die Frequenzwerte das Frequenzband in äquidistante Abschnitte unterteilen. Das damit erzeugte bandbegrenzte Spektrum der digitalen Reflexionskoeffizienten wird anschließend innerhalb einer Controllerschaltung 317 einer inversen Fouriertransformation, beispielsweise bei äquidistanten Frequenzabständen einer IFFT (inverse fast fourier transformation), unterzogen, die das Frequenzsignal in ein Zeitsignal transformiert. Dieses digitale Zeitsignal wiederum ist charakteristisch für die Summe der Reflexionen des ausgesandten und wieder empfangenen Messsignals. Es liegt vor in Form einer Wertetabelle von Zeitwerten und zugehörigen Reflexionsanteilen und kann hinsichtlich Ermittlung von lokalen Maxima ausgewertet werden. Diese lokalen Maxima kennzeichnen die einzelnen Reflexionen der verschiedenen Reflektoren, die nach der zugeordneten Zeit empfangen wurden. In dieser Form gleicht nun diese Zeit-Reflexionsamplitude-Wertetabelle den aus den bekannten Füllstandradarverfahren geläufigen digitalisierten Reflexionsprofilen. Weitere Auswerteschritte zur Bestimmung des gesuchten Echos der Füllgutoberfläche und die Bestimmung des exakten Reflexionszeitpunkts dieses Echos können deshalb aus den bekannten Methoden der Puls-Radar- oder FMCW-Radarsysteme übernommen werden.

Vielen Füllstandmessgeräten nach dem Radarprinzip ist gemein, dass die von der Messschaltung 101, 318 erzeugte Hochfrequenzenergie im jeweiligen Arbeitsbereich im Wesentlichen konstant ist. Figur 4 zeigt das entsprechende Verhalten. Die vom Messgerät abgestrahlte Hochfrequenzenergie wird im jeweiligen Arbeitsbereich zwischen f_{Start} und f_{Stop} in Abhängigkeit von der Leistungsfähigkeit der Schaltungselemente und der durch Zulassungen vorgegebenen Maximalpegel auf eine im Wesentlichen konstante Ausgangsleistung Pout 401 eingestellt.

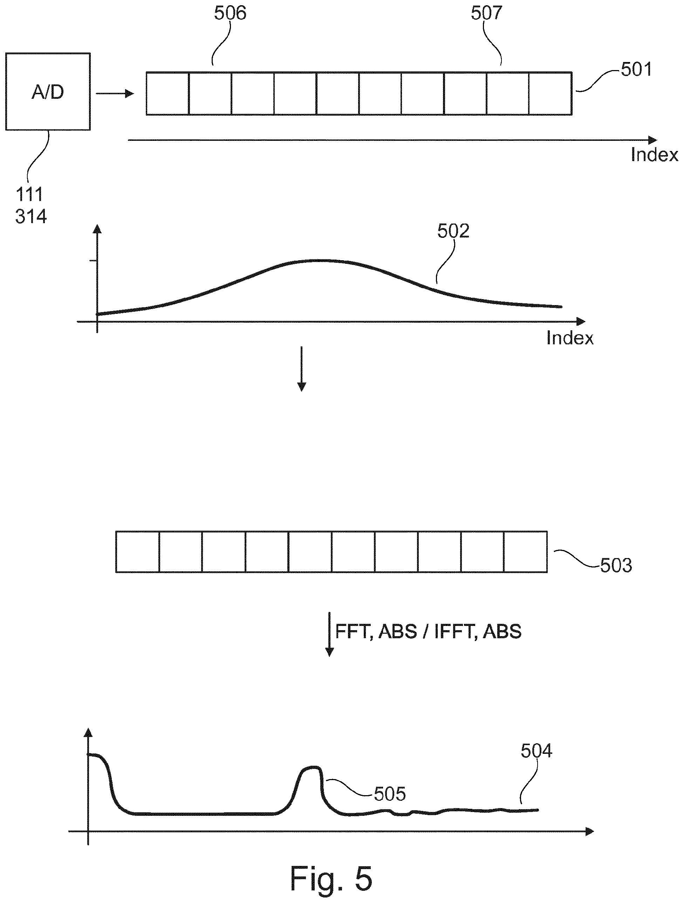

Figur 5 zeigt anhand einer Ablaufskizze wichtige Schritte zur Weiterverarbeitung der digitalisierten Abtastwerte 113, 319, welche im jeweiligen Controller 112, 317 des Messgerätes berechnet werden. Die digitalisierten Signalwerte 501 werden zur Verbesserung der Spektralanalyse zunächst mit einer Fensterfunktion 502 durch Multiplikation gewichtet. Die an dieser Stelle verwendbaren Funktionen, beispielsweise ein Bartlett- oder Hamming-Fenster, verbessern insbesondere die Unterdrückung von Nebenkeulen bei der Spektralanalyse. Das gefensterte Signal 503 wird schließlich im Falle eines kontinuierlich oder schrittweise frequenzmodulierten Radarsystems mit Hilfe einer FFT und anschließender Betragsbildung in eine Echokurve 504 überführt. Beim Reflektometerverfahren gemäß Fig. 3 wird an dieser Stelle vorzugsweise eine IFFT mit anschließender Betragsbildung zum Entstehen der Echokurve 504 führen. Die Echokurve 504 kann mit dem Fachmann bekannten Methoden auf ein Füllgutecho 505 hin untersucht werden, und dessen Position vom Controller 112, 317 nach außen hin bereitgestellt werden.

Nachfolgend werden einige Randbedingungen erläutert, welche den besonderen Vorteil der vorliegenden Erfindung verdeutlichen sollen.

Bei der Verwendung von Radar-Füllstandsensoren liegt sehr oft der Fall vor, dass die Energie oder Leistung zur Versorgung des Sensors durch äußere Umstände begrenzt ist. Begrenzte Energie steht zum einen dann zur Verfügung, wenn der Sensor durch einen Energiespeicher endlicher Kapazität, beispielsweise eine Batterie oder einen Akku, gespeist wird. Sehr oft kommt es zum anderen auch vor, dass ein Radar-Füllstandsensor als sogenannter Zweileitersensor betrieben wird. Das bedeutet, dass das Messgerät über ein einziges Adernpaar, eine sogenannte Zweidrahtleitung, sowohl mit Energie (beispielsweise bei einem Strom von 4-20 mA) versorgt wird als auch den Messwert signalisiert. Ein wichtiger Parameter zur Optimierung der vom Sensor benötigten Energie ist die Optimierung der vom Sensor abgestrahlten Sendeleistung 401.

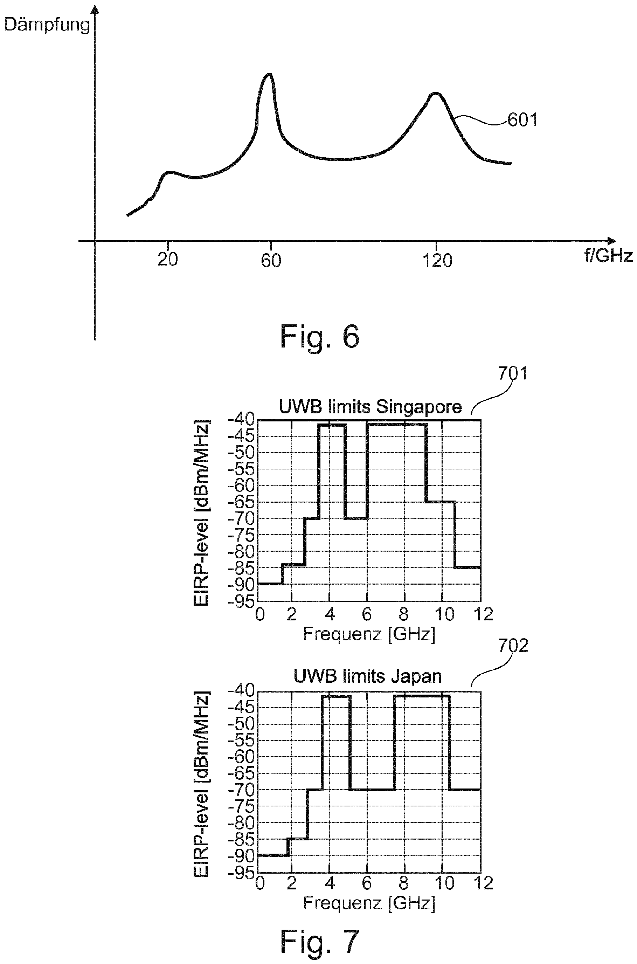

Ein anderer wichtiger Optimierungsansatz resultiert aus der Tatsache, dass bei Messungen in Behältern mit einer überlagerten Gasphase ein mitunter ausgeprägtes Absorptionsverhalten in zumindest einem Teilbereich des zur Messung verwendeten Frequenzspektrums vorliegt. Für die üblicherweise bei Mikrowellenmessgeräten verwendeten Arbeitsfrequenzen im Bereich von 0 ... 240 GHz lässt sich insbesondere bei geschlossenen Behältern und dem Auftreten einer wasserdampfgesättigten oder mit Ammoniak gesättigten Atmosphäre eine entsprechende Abschwächung der Mikrowellensignale beobachten. Figur 6 zeigt die Dämpfung elektromagnetischer Wellen in einer Wasserdampfatmosphäre als Funktion der Frequenz. Das Dämpfungsverhalten der entsprechenden Gasphasen hängt neben dem Medium auch von der Temperatur und dem Druck innerhalb des Behälters ab.

Bedingt durch die global immer weiter zusammenwachsenden Märkte und die Anforderung möglichst hoher Stückzahlen müssen die Hersteller moderner Sensoren in der Lage sein, die gesetzlichen und regulatorischen Anforderungen einer Vielzahl unterschiedlicher Länder zu erfüllen. Bei Radarsensoren bestehen in den verschiedenen Ländern mitunter unterschiedliche Vorgaben in Bezug auf die Leistung der vom Gerät zur Messung abgestrahlten elektromagnetischen Signale, welche in entsprechenden Funkzulassungsnormen festgelegt sind. Figur 7 zeigt beispielhaft den maximal erlaubten Sendepegel für Singapur 701 und Japan 702 im Bereich von 0 ... 12 GHz. Bei bekannten Radargeräten bestehen zwei unterschiedliche Ansätze, um den dargestellten Leistungspegeln Rechnung zu tragen. Möglich ist zum einen die Begrenzung der abgestrahlten Leistung auf das Minimum dessen, was im verwendeten Frequenzbereich in der Gesamtheit der avisierten Landeszulassungen erlaubt ist. Nachteilig hierbei ist, dass die Zuverlässigkeit und/oder Genauigkeit der eigentlichen Messung vermindert werden kann. Eine weitere Möglichkeit liegt darin, Geräte ab Werk für genau ein bestimmtes Zielverkaufsland zu produzieren, und die jeweiligen Grenzen der zulässigen abgestrahlten Leistung zu beachten. Hierdurch wird allerdings produktionsseitig die Gerätevielfalt erhöht, was zu erhöhten Kosten führen kann.

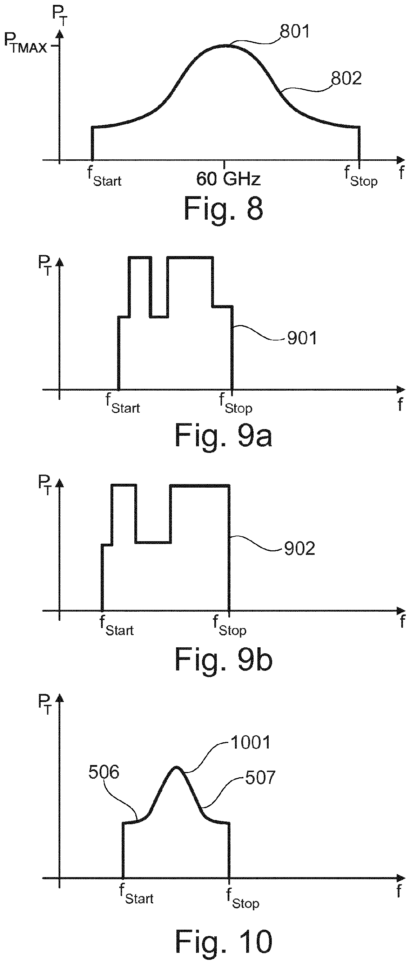

Gemäß einem Aspekt der Erfindung wird das Dämpfungsverhalten eines bekannten Mediums (vgl. Fig. 6) durch eine adaptive Steuerung der vom Füllstandmessgerät abgestrahlten Sendeleistung zumindest teilweise kompensiert. Figur 8 zeigt den Verlauf der Sendeleistung gemäß einer ersten Kompensation. Das Messgerät arbeitet in einer Ausführung im Bereich zwischen f_{Start} = 57 GHz und f_{Stop} = 64 GHz. Bei bekanntem Medium und daraus folgender bekannter Gasatmosphäre, bekanntem Arbeitsdruck und/oder bekannter Temperatur innerhalb eines Behälters kann das Messgerät selbständig feststellen, dass beispielsweise bei 60 GHz eine maximale Dämpfung des Signals eintreten wird. Beispielsweise ist das Dämpfungsverhalten der Behälteratmosphäre in Abhängigkeit der Bedingungen im Behälter in einer Datenbank des Messgeräts gespeichert. Folglich wird das Messgerät bei genau dieser Frequenz die maximal mögliche Signalleistung P_{TMAX} 801 abstrahlen, und die Sendeleistung in den anderen Bereichen reduzieren. Dies sorgt zum einen für eine weitgehend konstante Zuverlässigkeit der Messung über verschiedene Frequenzen hinweg, und minimiert zusätzlich die vom Messgerät benötigte Energie, was zu einer Erhöhung der Messwiederholrate führen kann.

Gemäß einem weiteren Aspekt der Erfindung wird die adaptive Anpassung der vom Füllstandmessgerät abgestrahlten Sendeleistung in Abhängigkeit vom jeweiligen Montageort eingestellt. Figur 9a und Figur 9b zeigen Ausführungsbeispiele für ein Messgerät mit einer beispielhaften Arbeitsfrequenz zwischen 3 GHz und 9 GHz. Wird durch eine entsprechende Parametrierung von Seiten des Benutzers oder durch eine automatisierte Bestimmung des aktuellen Montageortes beispielsweise ermittelt, dass das Gerät innerhalb des Hoheitsgebietes des Staates Singapur betrieben wird, so regelt das Gerät vollautomatisch die abgestrahlte Leistung entsprechend dem in Figur 9a dargestellten, gesetzlich erlaubten maximalen Abstrahlpegel entlang. Wird das Gerät jedoch in Japan installiert, so kann es nach entsprechender Eingabe oder vollautomatischer Ortsbestimmung den abgestrahlten Sendepegel gemäß dem Verlauf der Figur 9b für die in Japan erlaubte Kennlinie optimieren. Vorteilhaft an der beschriebenen Vorgehensweise ist, dass zum einen keine landesspezifischen Geräteausführungen produziert werden müssen und zum anderen der maximal erlaubte Sendepegel im jeweiligen Land optimal ausgenutzt werden kann, was zu einer erhöhten Zuverlässigkeit der Messung beitragen kann.

Figur 10 zeigt einen weiteren Ansatz zur Verbesserung des Betriebsverhaltens von Radarfüllstandmessgeräten. Während bei bestimmten Ausführungen die Sendeleistung innerhalb des Arbeitsfrequenzbereiches zwischen f_{Start} und f_{Stop} nahezu konstant gehalten wird, kann es von besonderem Vorteil sein, die im entsprechenden Frequenzbereich abgestrahlte Sendeleistung so zu regeln, dass diese im Wesentlichen der Kennlinie einer Fensterfunktion 502 folgt. Da die vom A/D-Wandler 111, 314 gewonnene Information am Anfang 506 und am Ende 507 des Arbeitsbereiches durch die Anwendung der Fensterfunktion 502 ehedem stark unterdrückt wird, kann dieser Berechnungsschritt von der digitalen Signalverarbeitung vorverlagert werden in die eigentliche Messwertgewinnung. Folgt die abgestrahlte Sendeleistung dem in Figur 9 dargestellten Verlauf, kann auf die erneute Anwendung einer Fensterfunktion 502 innerhalb der digitalen Signalverarbeitung verzichtet werden. Dies hat zur Folge, dass zum einen während der Erfassung der Messwerte 501 durch eine Reduktion der abgestrahlten Leistung in Teilbereichen des Arbeitsbereiches Energie eingespart wird, und darüber hinaus die digitale Signalverarbeitung beschleunigt werden kann, was ebenfalls zum Einsparen von Energie beitragen kann. Durch die beschriebenen Maßnahmen kann das Messgerät eine einzelne Messung mit reduziertem Energiebedarf ausführen, was in Summe dazu führen kann, dass die Messwiederholrate steigt und somit die Zuverlässigkeit der Messung erhöht werden kann.

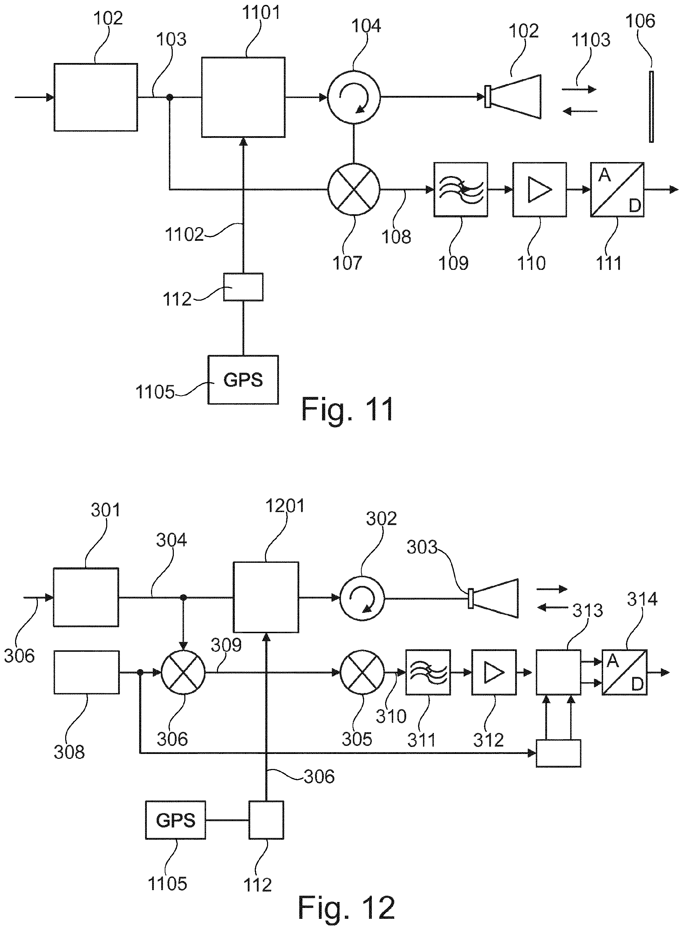

Figur 11 zeigt ein Füllstandradargerät zur Umsetzung einer frequenzabhängigen Sendeleistungsregelung in einem System 101 nach dem FMCW Verfahren. Das vom Synthesizer 102 erzeugte Signal 103 durchläuft auf seinem Weg zur Antenne 105 zunächst eine Sendeleistungseinstellvorrichtung 1101, welche das von der Antenne abgestrahlte Sendesignal 1103 in Abhängigkeit von der aktuellen Signalfrequenz leistungsmäßig verstärkt und/oder dämpft. Technisch umgesetzt wird dies innerhalb der Sendeleistungseinstellvorrichtung beispielsweise durch eine in Mikrostreifenleitungstechnik in Verbindung mit Hochfrequenzschaltern realisierte Filterbank, welche eine Vielzahl vorab definierter Sendeleistungscharakteristika 802, 901, 902, 1001 durch Filterung des Signals 103 bereitstellen kann. Die Auswahl der benötigten Filterbank und somit das Einstellen der gewünschten Sendeleistungscharakteristik kann durch das Controllersystem 112 über einen Steuereingang 1102 erfolgen. Alternativ wird mit der weiteren Integration von Mikrowellentechnik in hochintegrierte Schaltkreise die Möglichkeit eröffnet, über ein Steuersignal 1102 und einen sehr schnell reagierenden Variable Gain Amplifier (VGA) die Verstärkung des Signals 103 während eines Messzyklus in Echtzeit einzustellen. Die Sendeleistungseinstellvorrichtung 1101 wird in besonders vorteilhafter Weise bereits vor der Durchführung der Messung über den Steuereingang 1102, beispielsweise einen digitalen SPI Eingang, mit den gewünschten Verstärkungswerten programmiert. Die innerhalb des Schaltkreises 1101 in einer Look-Up-Table hinterlegten Verstärkungswerte können durch entsprechend schnelles Austakten und sehr schnelle Digital-Analog-Wandlung die Verstärkungscharakteristik eines bekannten VGA-Schaltkreises in der vorab gewünschten Art und Weise beeinflussen und somit zur Umsetzung des oben und im Folgenden beschriebenen Verfahrens beitragen.

Es ist ein Positionssensor 1105 vorgesehen, der die Position des Füllstandradargeräts ermitteln kann und diese Positionsdaten an die Steuerschaltung 112 weiterleiten kann.

Wesentlich einfacher gestaltet sich eine Vorrichtung zur Umsetzung des oben und im Folgenden beschriebenen Verfahrens in einem Schaltkreis 318 nach dem Reflektometerprinzip, wie es unter Bezugnahme auf Fig. 3 beschrieben ist.

Figur 12 zeigt eine entsprechende Schaltung. Das vom Synthesizer 301 erzeugte Signal 304 mit einer vorgebbaren, im jeweiligen Messabschnitt festen Frequenz liegt zeitlich deutlich länger an als dies bei einem kontinuierlich oder schrittweise modulierten FMCW Schaltkreis gemäß Fig. 11 der Fall ist. Somit kann als Sendeleistungseinstellvorrichtung 1201 ein übliches, digital einstellbares Verstärkungselement gewählt werden. Da der Wechsel von einer zu messenden Frequenz zur nächsten systembedingt durch die Controllerschaltung 317 über eine Steuerleitung 306 bewirkt wird, kann die gleiche Steuerleitung 306 dazu dienen, den neuen Verstärkungswert innerhalb der Sendeleistungseinstellvorrichtung 1201 einzustellen.

Einen weiteren wichtigen Aspekt zur Umsetzung des oben und im Folgenden beschriebenen Verfahrens betrifft die üblicherweise innerhalb der Controllerschaltung 112, 317 ablaufende digitale Signalverarbeitung, wie sie in Figur 5 verdeutlicht wird. Bedingt durch die Verstellung des Sendeleistungspegels in Abhängigkeit von der Sendefrequenz kann eine weitere Verbesserung des Messgerätes erzielt werden, wenn diese Pegelverstellung im Rahmen der Signalverarbeitung berücksichtigt wird.

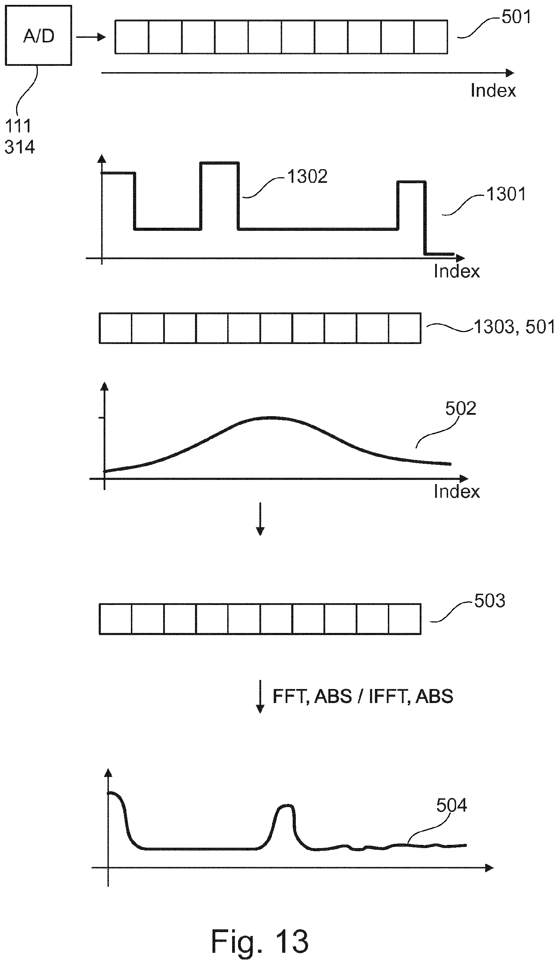

Figur 13 zeigt ein Ausführungsbeispiel für die entsprechend modifizierte digitale Signalverarbeitung. Das vorliegende Ausführungsbeispiel geht davon aus, dass innerhalb des Sendezweiges ein Sendepegel 901 entsprechend dem Verlauf der Figur 9 erzeugt und vom Füllstandmessgerät zur Messung abgestrahlt worden ist. Das vom A/D-Wandler 111, 314 erfasste Zwischenfrequenzsignal 501 liegt nach Abschluss eines Messdurchgangs komplett in digitaler Form im Speicher vor. Da die während der Messung vorliegende Variation der Amplitude signaltechnisch einer Amplitudenmodulation entspricht, und das Ergebnis der Messung aus einer spektralen Analyse der Messdaten abgeleitet wird, entsteht durch die Amplitudenvariation eine Verfälschung des Spektrums des Messsignals. Es zeigt sich, dass in einer vorteilhaften Ausgestaltung der Erfindung die Amplitudenvariation 901 in einem ersten Schritt 1301 der digitalen Signalverarbeitung rückgängig gemacht werden sollte. Hierzu wird das erfasste Messsignal 501 zunächst mit dem inversen Verlauf 1302 der Sendecharakteristik 901 multipliziert. Das so entstehende Messsignal 1303, 501 entspricht systemtheoretisch wieder dem idealen Signal, das zur spektralen Analyse zunächst mit einer Fensterfunktion 502 gewichtet und anschließend nach bekanntem Verfahren (FFT, IFFT) schließlich in eine Echokurve überführt wird. Es sei an dieser Stelle darauf hingewiesen, dass die Controllereinheit 112, 317 die Beaufschlagung mit der inversen Funktion 1302 automatisiert anwenden kann, da die Information über den abgesendeten Sendepegel auch von der Controllereinheit verwaltet wird. Es sei zudem darauf hingewiesen, dass die Gewichtung mit den Funktionen 1302, 502 auch zu einem einzigen Berechnungsschritt zusammengefasst werden kann.

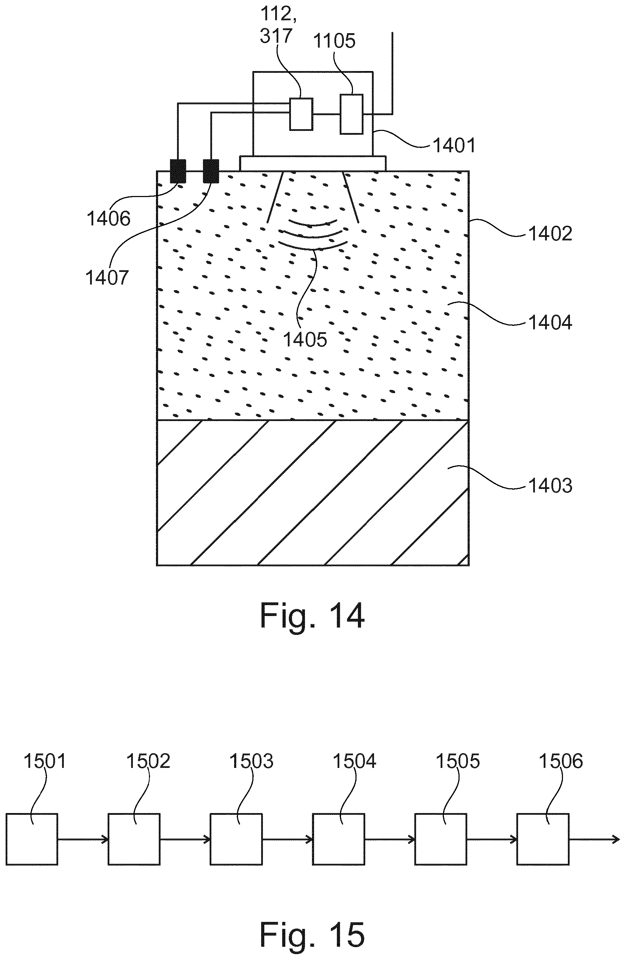

Figur 14 zeigt ein Füllstandradargerät 1401 auf einem Behälter 1402. Die im Behälter zu messende Flüssigkeit 1403 bildet eine gesättigte Gasatmosphäre 1404 aus, die die Dämpfung der Mikrowellen 1405 in Abhängigkeit vom Druck und von der Temperatur der Gasatmosphäre 1404 beeinflusst. Das Messgerät 1401 ist in der Lage, den Druck und die Temperatur innerhalb des Behälters 1402 zu erfassen, beispielsweise durch interne Sensoren oder durch den Anschluss externer Sensoren 1406, 1407. Aufbauend auf diesen Werten kann das Messgerät die Signaldämpfung 601 der Mikrowellen vollautomatisch bestimmen, und die zur Messung abgestrahlte Sendeleistung 802 vollautomatisch optimieren. Das erfindungsgemäße Messgerät berücksichtigt hierbei Benutzervorgaben über die Art des Mediums im Behälter. Es kann auch vorgesehen sein, dass der Sensor Benutzervorgaben über die Applikation auswertet, beispielsweise Informationen, welche definieren, ob eine Messung innerhalb oder außerhalb eines Behälters erfolgt. Eine Anpassung an die entsprechenden gesetzlich variierenden Vorgaben in Bezug auf die erlaubte Sendeleistung in Abhängigkeit von der Applikation ist auch in diesem Fall vollautomatisch möglich.

Weiterhin ist das Messgerät eingerichtet, auf Basis von Benutzervorgaben das Land, in welchem sich der Behälter 1402 befindet, zu ermitteln, und einen für das jeweilige Betriebsland optimierten Verlauf des Sendeleistungspegels 701, 702 einzustellen. In einer alternativen Ausführungsform weist das Messgerät 1401 eine automatische Positionserfassungseinrichtung 1402 auf, beispielsweise einen GPS Empfänger. Anhand der Daten der Positionserfassungseinrichtung 1402 kann das Messgerät automatisiert den Standort der Anlage ermitteln, und hieraus wiederum automatisiert den Verlauf der Sendeleistung über der Frequenz entsprechend den im jeweiligen Land geltenden Vorschriften optimieren.

Zu den Blockschaltbildern und den Prinzipzeichnungen ist allgemein anzumerken, dass sie auf die wesentlichen Komponenten reduziert sind und für die praktische Umsetzung notwendige Komponenten teilweise weggelassen oder vereinfacht dargestellt wurden, da sie dem Fachmann bekannt sind. Dies betrifft beispielsweise Filtermaßnahmen am Ausgang der Mischer, um nur die erwünschten Mischfrequenzen durchzulassen und unerwünschte Mischprodukte zu unterdrücken. Außerdem ist dem Fachmann geläufig, Signale bei Bedarf an verschiedenen Stellen der Signalkette zu verstärken, um den Signal-Rausch-Abstand zu erhöhen. Dies könnten beispielsweise Verstärker im Sendezweig oder im Empfangszweig vor dem Empfangsmischer sein. Außerdem wurde hier nur der für die unmittelbare Messtechnik wichtige Teil der Sensorschaltung dargestellt. Ein nach diesem Prinzip aufgebauter Füllstand-Radarsensor kann selbstverständlich weitere Schaltungsteile enthalten.

Fig. 15 zeigt ein Flussdiagramm eines Verfahrens gemäß einer Ausführungsform der Erfindung. In Schritt 1501 beginnt die Erzeugung eines elektromagnetischen Sendesignals, dessen Dauer größer ist als die doppelte Laufzeit des Sendesignals von der Signalquelle zum Füllgut. Das Sendesignal ist ein kontinuierliches oder stufenförmiges Signal mit zumindest abschnittsweise unterschiedlicher Frequenz. In Schritt 1502 wird damit begonnen, das Sendesignal in Richtung der Füllgutoberfläche abzustrahlen. In Schritt 1503 wird die Leistung des Sendesignals verändert, und zwar in Abhängigkeit seiner aktuellen Frequenz. Die Änderung der Leistung entspricht einem vorgebbaren Zusammenhang zwischen Frequenz und Leistung. Dieser Zusammenhang kann in Schritt 1504 vom Messgerät geändert werden, beispielsweise, weil sich die Bedingungen im Behälter geändert haben. In Schritt 1505 wird das abgestrahlte Sendesignal an der Füllgutoberfläche reflektiert und in Schritt 1506 vom Füllstandmessgerät empfangen und verarbeitet. Ergänzend sei daraufhingewiesen, dass "umfassend" und "aufweisend" keine anderen Elemente oder Schritte ausschließt und die unbestimmten Artikel "eine" oder "ein" keine Vielzahl ausschließen.

Bezugszeichen in den Ansprüchen sind nicht als Einschränkungen anzusehen.

## Patentansprüche

1. Füllstandradargerät, aufweisend:
eine Signalquellenanordnung (102, 301), eingerichtet zum Erzeugen eines elektromagnetischen Sendesignals (103, 103') mit einer sich während eines Messzyklus ändernden Frequenz, und dessen Dauer größer ist als die doppelte Laufzeit des Sendesignals von der Signalquellenanordnung zum Füllgut;
**dadurch gekennzeichnet, dass** das Füllstandradargerät weiter aufweist:
eine Sendeleistungseinstellvorrichtung (1101, 1201), eingerichtet zum Einstellen der Leistung des Sendesignals in Abhängigkeit von der Frequenz des Sendesignals entsprechend eines vorgebbaren Zusammenhangs.

2. Füllstandradargerät nach Anspruch 1,
wobei der vorgebbare Zusammenhang abhängig ist von der Temperatur des Füllguts, der Temperatur im Behälter, dem Druck im Behälter, der Zusammensetzung des Füllgutes und/oder den Strahlungsdämpfungseigenschaften der Behälteratmosphäre.

3. Füllstandradargerät nach einem der vorhergehenden Ansprüche,
wobei der vorgebbare Zusammenhang abhängig ist vom Montageort des Füllstandradargeräts.

4. Füllstandradargerät nach einem der vorhergehenden Ansprüche, weiter aufweisend:
eine Auswerteschaltung (112, 317) zum Bestimmen des Füllstands unter Verwendung des vorgebbaren Zusammenhangs.

5. Füllstandradargerät nach einem der vorhergehenden Ansprüche, weiter aufweisend:
während einer Betriebsphase des Füllstandradargeräts.

6. Füllstandradargerät nach einem der vorhergehenden Ansprüche,
wobei die Steuerschaltung (1104) zum Bestimmen des vorgebbaren Zusammenhangs unter Verwendung benutzerseitig eingegebener oder vom Füllstandradargerät erfasster Kenngrößen eingerichtet ist.

7. Füllstandradargerät nach einem der vorhergehenden Ansprüche, weiter aufweisend:
einen Positionssensor (1105) zum Bestimmen des Montageorts des Füllstandradargeräts.

8. Füllstandradargerät nach einem der vorhergehenden Ansprüche, weiter aufweisend:
eine Sende- und Empfangsschaltung (114), eingerichtet zum:
Aussenden des Sendesignals in Richtung einer Füllgutoberfläche;
Empfangen des an der Füllgutoberfläche reflektierten Sendesignals und Mischen des empfangenen reflektierten Sendesignals mit einem weiteren Signal zur Bildung eines reflexionsabhängigen Empfangssignals (108, 108'), aus welchem sich der Füllstand bestimmen lässt.

9. Füllstandradargerät nach einem der vorhergehenden Ansprüche,
wobei das Sendesignal (103, 103') eine abschnittsweise konstante Frequenz aufweist;
wobei die einzelnen Frequenzen innerhalb eines definierten Frequenzbandes verteilt sind.

10. Verfahren zur Radarfüllstandbestimmung, aufweisend die folgenden Schritte:
Erzeugen eines elektromagnetischen Sendesignals (103, 103') mit einer sich während eines Messzyklus ändernden Frequenz, und dessen Dauer größer ist als die doppelte Laufzeit des Sendesignals von der Signalquelle zum Füllgut;
Einstellen der Leistung des Sendesignals in Abhängigkeit von der Frequenz des Sendesignals entsprechend eines vorgegebenen Zusammenhangs.

11. Programmelement, das, wenn es auf einem Prozessor (16) eines Füllstandradargeräts ausgeführt wird, das Füllstandradargerät veranlasst, die Schritte nach Anspruch 10 durchzuführen.

12. Computerlesbares Medium, auf dem ein Programmelement nach Anspruch 11 gespeichert ist.

## Claims

1. Fill level radar device, comprising:
a signal source arrangement (102, 301) configured to generate an electromagnetic transmission signal with a frequency changing during a measurement cycle and which duration is longer than double a run time of the transmission signal from a signal source arrangement to a filling material,
**characterized in that** the fill level radar device further comprises:
a transmission-power adjustment circuitry configured to adjust a power of the transmission signal depending on a frequency of the transmission signal in accordance with a predefined correlation.

2. Fill level radar device according to claim 1,
wherein the predefined correlation is dependent on a temperature of the filling material, a temperature in a container, a pressure in the container, a composition of the filling material and/or radiation attenuation properties of a container atmosphere.

3. Fill level radar device according to one of the previous claims,
wherein the predefined correlation is dependent on an installation location of the fill level radar device.

4. Fill level radar device according to one of the previous claims, further comprising:
an analysis circuit (112, 317) for determining the fill level using the predefined correlation.

5. Fill level radar device according to one of the previous claims, further comprising:
a control circuit (1104) for changing the predefined correlation during an operational phase of the fill level radar device.

6. Fill level radar device according to one of the previous claims,
wherein the control circuit (1104) is configured for determining the predefined correlation using parameters that are input by a user or detected parameters of the fill level radar device.

7. Fill level radar device according to one of the previous claims, further comprising:
a position sensor (1105) for determining the installation location of the fill level radar device.

8. Fill level radar device according to one of the previous claims, further comprising:
a transceiving and receiving circuit (114) configured for:
emitting the transmission signal towards a filling material surface;
receiving the transmission signal reflected by the filling material surface and mixing the received reflected transmission signal with a further signal for forming a reflection-dependent reception signal (108, 108') from which a fill level can be determined.

9. Fill level radar device according to one of the previous claims,
wherein the transmission signal comprises a frequency that is constant in portions, and
wherein individual frequencies are distributed within a defined frequency band.

10. Method for radar fill level determination, comprising the following steps:
generating an electromagnetic transmission signal (103, 103') with a frequency changing during a measurement cycle and which duration is longer than double a run time of the transmission signal from a signal source to a filling material,
adjusting a power of the transmission signal depending on the frequency of the transmission signal in accordance with a predefined correlation.

11. Program element that, when executed by a processor (16) of a fill level radar device, induce the fill level radar device to carry out the steps of claim 10.

12. Computer-readable medium on which a program element according to claim 11 is stored.

## Revendications

1. Jauge de niveau de remplissage à radar, comportant :
un ensemble source de signal (102, 301), adapté pour générer un signal d'émission (103, 103') électromagnétique avec une fréquence variable pendant un cycle de mesurage, et dont la durée est supérieure au double du temps de propagation du signal d'émission de l'ensemble source de signal au produit de remplissage ;
**caractérisée en ce que** la jauge de niveau de remplissage à radar comporte en outre :
un dispositif de réglage de puissance d'émission (1101, 1201), adapté pour régler la puissance du signal d'émission en fonction de la fréquence du signal d'émission conformément à une relation prédéfinissable.

2. Jauge de niveau de remplissage à radar selon la revendication 1,
dans laquelle la relation prédéfinissable est dépendante de la température du produit de remplissage, de la température dans le contenant, de la pression dans le contenant, de la composition du produit de remplissage et/ou des propriétés d'atténuation du rayonnement de l'atmosphère du contenant.

3. Jauge de niveau de remplissage à radar selon l'une des revendications précédentes,
dans laquelle la relation prédéfinissable est dépendante du lieu de montage de la jauge de niveau de remplissage à radar.

4. Jauge de niveau de remplissage à radar selon l'une des revendications précédentes, comportant en outre :
un circuit d'évaluation (112, 317) destiné à déterminer le niveau de remplissage en utilisant la relation prédéfinissable.

5. Jauge de niveau de remplissage à radar selon l'une des revendications précédentes, comportant en outre :
un circuit de commande (1104) destiné à modifier la relation prédéfinissable pendant une phase de fonctionnement de la jauge de niveau de remplissage à radar.

6. Jauge de niveau de remplissage à radar selon l'une des revendications précédentes,
dans laquelle le circuit de commande (1104) est adapté pour déterminer la relation prédéfinissable en utilisant des grandeurs caractéristiques saisies par l'utilisateur ou acquises par la jauge de niveau de remplissage à radar.

7. Jauge de niveau de remplissage à radar selon l'une des revendications précédentes, comportant en outre :
un capteur de position (1105) destiné à déterminer le lieu de montage de la jauge de niveau de remplissage à radar.

8. Jauge de niveau de remplissage à radar selon l'une des revendications précédentes, comportant en outre :
un circuit d'émission et de réception (114), adapté pour :
émettre le signal d'émission en direction d'une surface de produit de remplissage ;
recevoir le signal d'émission réfléchi sur la surface de produit de remplissage et mélanger le signal d'émission réfléchi reçu avec un autre signal pour former un signal de réception (108, 108') dépendant de la réflexion, à partir duquel le niveau de remplissage peut être déterminé.

9. Jauge de niveau de remplissage à radar selon l'une des revendications précédentes,
dans laquelle le signal d'émission (103, 103') présente une fréquence constante sur certaines parties ;
dans laquelle les différentes fréquences sont distribuées dans une bande de fréquences définie.

10. Procédé de détermination du niveau de remplissage par radar, comportant les étapes suivantes :
génération d'un signal d'émission (103, 103') électromagnétique avec une fréquence variable pendant un cycle de mesurage, et dont la durée est supérieure au double du temps de propagation du signal d'émission de la source de signal au produit de remplissage ;
réglage de la puissance du signal d'émission en fonction de la fréquence du signal d'émission conformément à une relation prédéfinie.

11. Élément de programme qui, quand il est exécuté sur un processeur (16) d'une jauge de niveau de remplissage à radar, amène la jauge de niveau de remplissage à radar à exécuter les étapes selon la revendication 10.

12. Support lisible par ordinateur, sur lequel est enregistré un élément de programme selon la revendication 11.
